# EUROPÄISCHE PATENTSCHRIFT

(11) **EP 2 398 665 B1**
(45) Veröffentlichungstag und Bekanntmachung des Hinweises auf die Patenterteilung: **10.09.2014**
(21) Anmeldenummer: 10720961.1
(22) Anmeldetag: 08.03.2010
(51) Int. Cl.: B60K 17/04

(54) **ANTRIEBSVORRICHTUNG FÜR EIN FAHRZEUG**
DRIVE APPARATUS FOR VEHICLE
DISPOSITIF D'ENTRAÎNEMENT POUR VÉHICULE

(30) Priorität: 23.02.2009 DE 102009010130
(43) Veröffentlichungstag der Anmeldung: 28.12.2011
(73) Patentinhaber: Schaeffler Technologies GmbH & Co. KG, 91074 Herzogenaurach (DE)
(72) Erfinder: SCHMIDT, Meinhard, 91126 Kammerstein (DE); FISCHER, Raphael, 91075 Herzogenaurach (DE); KRAUS, Manfred, 91074 Herzogenaurach (DE)
(86) Internationale Anmeldenummer: PCT/IB2010/001060
(87) Internationale Veröffentlichungsnummer: WO 2010/095060

(56) Entgegenhaltungen:
- EP-A2- 1 457 378
- WO-A1-00/32462
- FR-A1- 2 387 813

## Beschreibung

Die vorliegende Erfindung betrifft eine Antriebsvorrichtung mit den Merkmalen des Oberbegriffs des Anspruchs 1. Insbesondere betrifft die Erfindung eine Antriebsvorrichtung für ein Fahrzeug mit zumindest einem Antrieb und einem durch den Antrieb angetriebenen Rad. Als radgetriebene Fahrzeuge kommen z. B. Motorräder, Autos, Lastkraftwagen, Elektrofahrzeuge, Flurförderfahrzeuge, Golfcarts (insbesondere Elektrocarts) oder Rollstühle in Betracht. Insbesondere ist die vorliegende Antriebsvorrichtung zur Verwendung in Fahrzeugen mit Einzelradantrieben, vorzugsweise elektrisch betriebenen Einzelradantrieben, einsetzbar. Eine solche Antriebsvorrichtung ist aus der WO 00/32462 bekannt.

Gerade bei Kraftfahrzeugen mit Einzelradantrieben, bei denen zumeist zwei oder auch vier Räder einzeln angetrieben sind, besteht die Anforderung Bauraum im Bereich der Radachsen der Kraftfahrzeuge zu schaffen, um in diesem Bauraum die jeweiligen Antriebe (insbesondere die Elektromotoren) bzw. für die Antriebe benötigte Energiespeicher anzuordnen.

Ein möglicher Lösungsweg für diese Anforderung ist die Integration der Elektromotoren bzw. von Teilen des Antriebsstranges in die Räder selbst. So schlägt die deutsche Gebrauchsmusterschrift DE 20 2004 016 571 U1 vor, ein Zahnradgetriebe zur Untersetzung der Motorauf-Rad-Drehzahl in den Antriebsstrang zu integrieren und zusätzlich zwischen Hinterachse und angetriebenen Rädern ein einstufiges Zugmittelgetriebe anzuordnen. Die deutsche Offenlegungsschrift DE 102 25 731 A1 schlägt für ein elektrisch angetriebenes Fahrzeug mit Einzelradantrieben vor, ein Verbindungsgetriebe in der Fahrzeugwanne anzuordnen, welches über eine Gelenkwelle mit einem in den Rädern angeordneten Planetengetriebe verbunden ist.

Gerade die Ausführung der DE 102 25 731 A1 erfordert ein aufwändiges Schmierungs- und Dichtungssystem. Weiterhin ist der Aufwand, das Getriebe akustisch unkritisch zu gestalten, hoch. Außerdem ist festzustellen, daß eine Verwendung von Zahnradgetrieben oder Planetengetrieben in einem Fahrzeugrad kritisch ist, da Verformungen des Systems unter äußeren Lasten, z. B. bei Kurvenfahrt und Vertikalstößen, auftreten können. Derartige Verformungen beeinträchtigen aber die Funktionsweise des Getriebes. Desweiteren sind gerade Zahnrad- bzw. Stirnradgetriebe teuer in Herstellung und Montage.

Es ist daher eine Aufgabe der vorliegenden Erfindung eine alternative Antriebsvorrichtung für ein Fahrzeug vorzuschlagen, welche in der Umgebung der Radaufhängung angeordnet werden kann und einen Bauraumgewinn im Bereich der Radachsen ermöglicht.

Die vorliegende Aufgabe wird erfindungsgemäß gelöst durch eine Antriebsvorrichtung für ein Fahrzeug mit den Merkmalen des Patentanspruchs 1. Insbesondere umfasst diese Antriebsvorrichtung zumindest ein Antrieb und ein durch den Antrieb angetriebenes Rad, wobei zwischen Antrieb und angetriebenen Rad ein zweistufiges Zugmittelgetriebe angeordnet ist, das ein Drehmoment zwischen Antrieb und angetriebenem Rad überträgt.

Weiterhin umfasst die Antriebsvorrichtung eine Synchronscheibe, welche einen Übergabebereich aufweist, der zumindest teilweise vom zweiten Zugmittel umschlungen ist, wobei diese Synchronscheibe mit der Radnabe oder unmittelbar mit der zweiten angetriebenen Welle verbunden ist.

Das zweistufige Zugmittelgetriebe ist vorzugsweise im angetriebenen Rad bzw. im Bereich der Radaufhängung angeordnet.

Weiterhin ist das zweistufige Zugmittelgetriebe vorzugsweise ein Untersetzungsgetriebe.

Die vorliegende Antriebsvorrichtung sieht also eine Kraftübertragung von Antrieb auf angetriebenes Rad, vorzugsweise in Form einer Untersetzung, über Zugmittel, wie Zahnriemen, Keilriemen oder Gliederketten, vor, welche im angetriebenen Rad angeordnet sind. Besondere Vorteile der Verwendung der Zugmittel sind der ruhige Lauf sowie die im Verhältnis zu Zahnradgetrieben hohe Unempfindlichkeit gegen Einflüsse von außen, wie z. B. Wasser und Bremsstaub. Die vorerwähnte Verformung des Systems spielt bei Zugmitteln eine nur untergeordnet Rolle, insbesondere sind Zugmittel gegen Abweichungen von der Achsparallelität wesentlich unempfindlicher als Zahnradpaarungen. Daher können Wartungsarbeiten an diesem System sehr niedrig gehalten werden. Wechselintervalle der Zugmittel liegen im Bereich von ca. 60.000 km Laufleistung. Insbesondere bietet die erfindungsgemäße Antriebsvorrichtung einen Bauraumgewinn, wodurch Elektromotoren im Bereich der Radachsen auf wesentlich einfachere Weise angeordnet werden können, und wodurch in der Nähe der Radaufhängung mehr Bauraum für Energiespeicher geschaffen werden kann. Mit der vorliegenden Antriebsvorrichtung kann ein in ein Fahrzeugrad integrierbares, robustes und kostengünstiges Untersetzungsgetriebe mit Zugmitteltrieb geschaffen werden.

Gemäß einem bevorzugten Ausführungsbeispiel umfasst die Antriebsvorrichtung einen mit einer Fahrzeugkarosserie verbundenen Linearschlitten und eine in diesem Linearschlitten gelagerte und mit dem Antrieb verbundene erste angetriebene Welle (welche die Eingangswelle des Zugmittelgetriebes bildet).

Dabei kann die erste angetriebene Welle eine (Innen-) Verzahnung zur Anbindung an eine Antriebswelle des Antriebes aufweisen.

Weiterhin kann die Antriebsvorrichtung einen Radlagerträger umfassen, der am Linearschlitten federnd abgestützt ist. Hierbei kann der Radlagerträger zumindest einen Schwingenarm und zumindest eine Führungssäule aufweisen, wobei die Führungssäule beidseitig am Schwingenarm befestigt ist, wobei die Führungssäule im Linearschlitten geführt ist, und wobei zwischen Linearschlitten und Radlagerträger federnde Elemente angeordnet sind. Weiterhin bevorzugt sind zwei bezüglich dem Linearschlitten gegenüberliegend angeordnete Schwingenarme und zwei parallel zueinander angeordnete Führungssäulen vorgesehen, wobei beide Führungssäulen im Führungsschlitten geführt sind.

Der Radlagerträger kann am Linearschlitten derart federnd abgestützt sein, dass beim Ein- und Ausfedern gleiche Federwege zur Verfügung stehen.

Die Antriebsvorrichtung kann weiterhin eine zweite angetriebene Welle (welche die Radwelle des angetriebenen Rades bildet) umfassen, die über ein Radlager am Radlagerträger abgestützt ist, wobei diese zweite angetriebene Welle eine Radnabe aufweist oder mit einer solchen verbunden ist, an welcher eine Felge des angetriebenen Rades befestigbar ist.

Die erste angetriebene Welle kann einen Übergabebereich aufweisen, der von einem Zugmittel zumindest teilweise umschlungen ist, so dass das Drehmoment zwischen erster angetriebener Welle und erstem Zugmittel übertragbar ist. Dieser Übergabebereich der ersten angetriebenen Welle kann als eine an der ersten angetriebenen Welle ausgebildete oder eine mit dieser verbundene erste (Zahn-)Riemenscheibe ausgebildet sein, die von einem (Zahn-) Riemen als erstem Zugmittel zumindest teilweise umschlungen ist.

Die Antriebsvorrichtung kann weiterhin eine Umlenkrolle aufweisen, welche am Radlagerträger abgestützt ist, wobei die Umlenkrolle einen ersten Übergabebereich aufweist, der vom ersten Zugmittel zumindest teilweise umschlungen ist, so dass das Drehmoment zwischen erstem Zugmittel und Umlenkrolle übertragbar ist.

Diese Umlenkrolle kann einen zweiten Übergabebereich aufweisen, der von einem zweiten Zugmittel zumindest teilweise umschlungen ist, so dass das Drehmoment zwischen Umlenkrolle und zweitem Zugmittel übertragbar ist.

Der erste Übergabebereich und/oder der zweite Übergabebereich der Umlenkrolle kann jeweils eine an der Umlenkrolle ausgebildete oder eine mit dieser verbundene (Zahn-) Riemenscheibe sein, die von einem (Zahn-) Riemen als erstem bzw. zweiten Zugmittel zumindest teilweise umschlungen ist.

Die Umlenkrolle kann derart angeordnet sein, dass diese in vertikaler Richtung den halben Ein- bzw. Ausfederweg zurücklegt.

Die Antriebsvorrichtung kann weiterhin eine Bremseinrichtung aufweisen, welche mit dem Radlagerträger verbunden ist.

Die vorliegende Erfindung wird nachfolgend anhand bevorzugter Ausführungsbeispiele in Verbindung mit den zugehörigen Figuren näher erläutert. In diesen zeigen:
- Fig. 1: Eine Frontalansicht (links) sowie eine Schnittdarstellung (rechts) entlang der Schnittlinie A-A im Neutralzustand, in dem Antriebs- und Radachse zusammenfallen,
- Fig. 2 und Fig. 3: perspektivische Darstellungen der Antriebsvorrichtung, aus Richtung der Fahrzeugkarosserie betrachtet, unter Weglassung der Felge und des mit der Felge verbundenen Reifens,
- Fig. 4: eine weitere perspektivische Darstellung der Antriebsvorrichtung, aus Blickrichtung der Fahrzeugkarosserie betrachtet, unter Weglassung der Felge und des Reifens und
- Fig. 5: eine weitere perspektivische Darstellung der Antriebsvorrichtung, aus Richtung der Fahrzeugkarosserie betrachtet, unter Weglassung der Felge und des mit der Felge verbundenen Reifens.

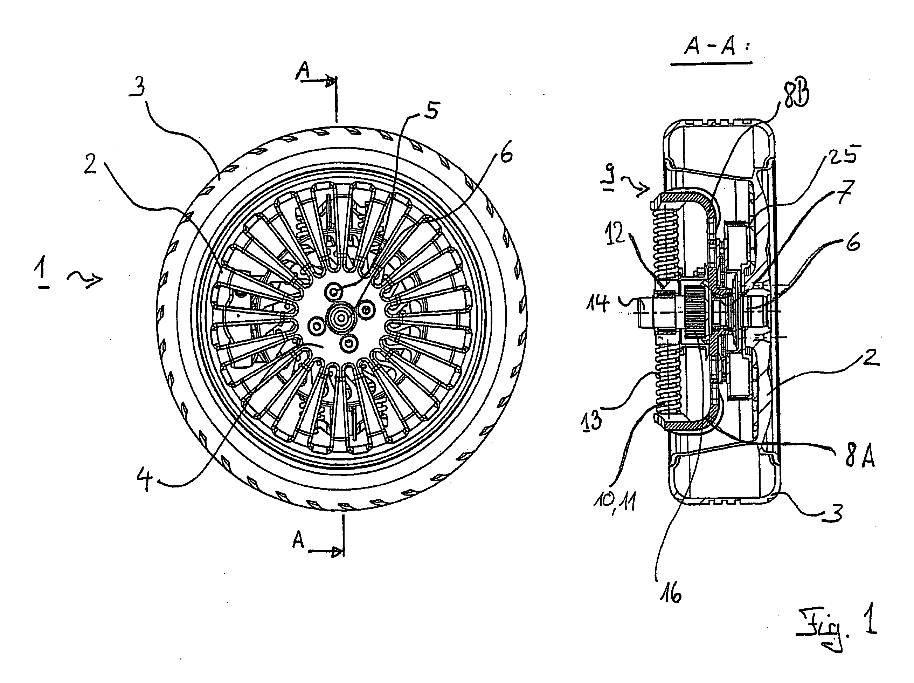

Fig. 1 zeigt im linken Teil der Figur eine Frontalansicht auf ein angetriebenes Rad 1 mit einer Felge 2 und einem auf der Felge angeordnetem Reifen 3. Die Felge umfasst eine Radnabe 4, welche über Schraubenverbindungen 5 mit einer Radwelle 6 (im Rahmen der vorliegenden Anmeldung auch als "zweite angetriebene Welle" bezeichnet) verbunden ist.

Die Felge 2 weist vorliegend Speichen auf, durch welche Komponenten der Antriebsvorrichtung teilweise ersichtlich sind. Die vorliegende Lehre ist aber nicht auf diese Ausbildung der Felge beschränkt. Vielmehr sind auch jegliche andere Ausbildungen der Felge verwendbar.

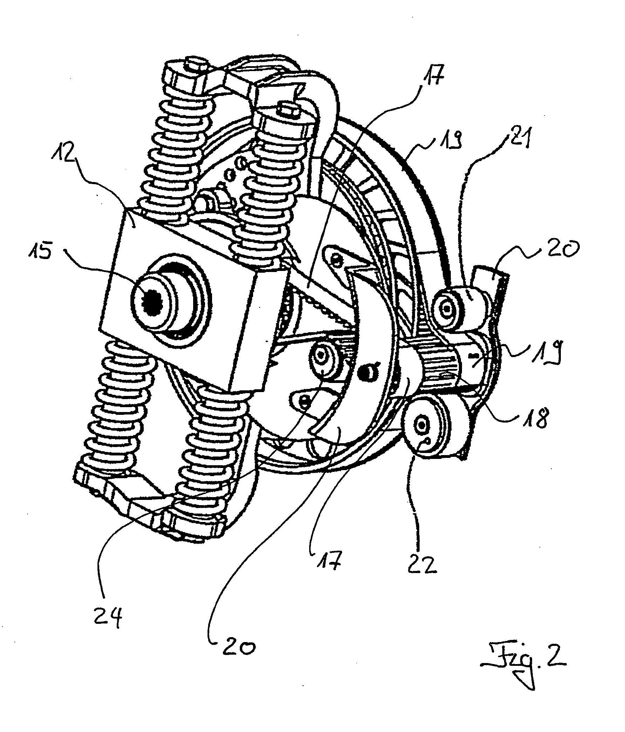

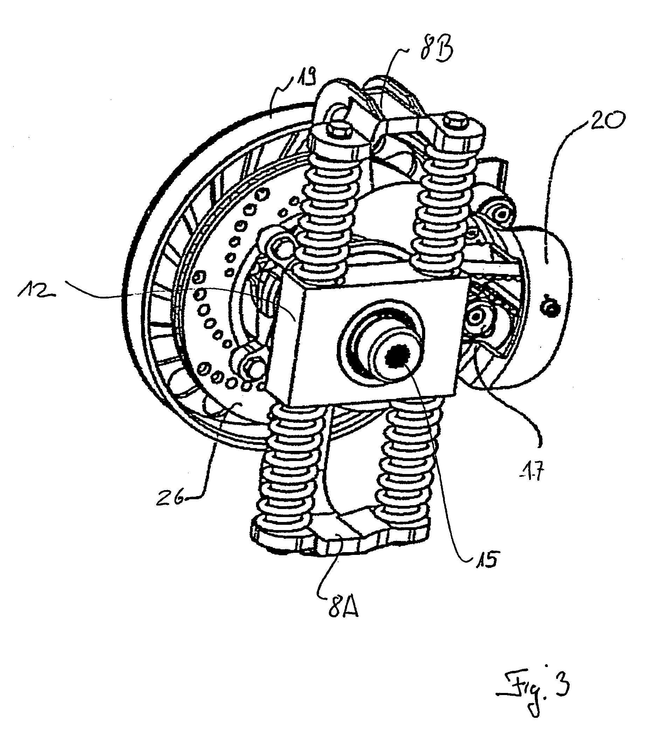

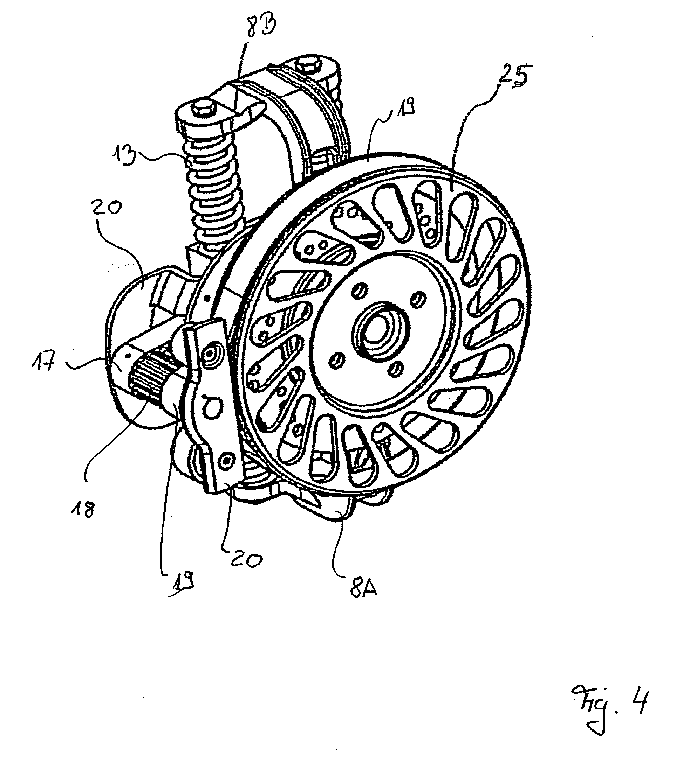

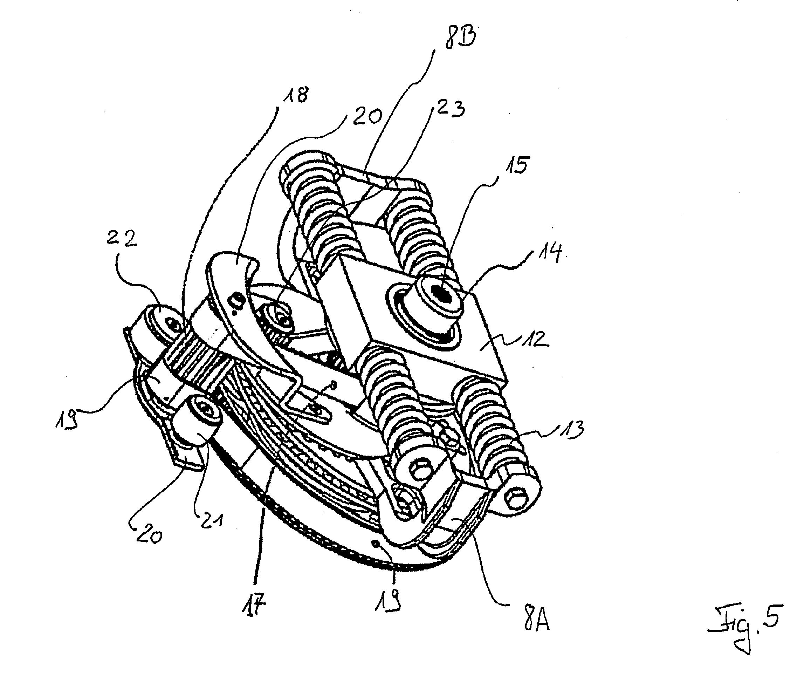

In Bezug auf Fig. 1 (rechte Seite) und die Fig. 2 bis 5 werden nachfolgend die Komponenten der Antriebsvorrichtung beschrieben.

Der Schnittdarstellung gemäß Fig. 1 (rechte Seite) ist entnehmbar, dass die Radwelle 6 an einem Radlager 7 abgestützt ist. Das Radlager 7 ist an einem Radlagerträger 9 abgestützt. Der Radlagerträger umfasst zwei Schwingenarme 8A, 8B. Jeder der Schwingenarme 8A, 8B umfasst einen längserstreckten Bereich und einen zu diesem längserstreckten Bereich im Wesentlichen rechtwinklig angeordneten Bereich, welche über einen gekrümmten Bereich miteinander verbunden sind. Endbereiche der Schwingenarme 8A, 8B sind durch zwei parallel zueinander angeordnete Führungssäulen 10, 11 miteinander verbunden. Die vorliegende Lehre ist aber nicht auf diese Ausbildung des Radlagerträgers mit genau zwei Schwingenarmen und die Verwendung von genau zwei parallel zueinander angeordneten Führungssäulen beschränkt. Vielmehr sind Anzahl und Gestaltung der Schwingenarme sowie Anzahl, Anordnung und Gestaltung der Führungssäule(n) abhängig vom Einzelfall (insbesondere von der erwarteten Belastung und dem zur Verfügung stehenden Bauraum) und werden entsprechend angepasst auf den jeweiligen Anwendungsfall.

Die Führungssäulen 10, 11 sind in einem Linearschlitten 12 geführt. Der Linearschlitten 12 ist an der Fahrzeugkarosserie, unmittelbar oder über ein Verbindungselement, abgestützt. Die vorliegende Lehre ist wiederum nicht auf diese gezeigte Ausbildung des Linearschlittens und die Verwendung genau eines Linearschlittens beschränkt. Vielmehr sind Anzahl an Linearschlitten, Gestaltung des bzw. der Linearschlitten, und der Führung der Führungssäulen in dem bzw. den Linearschlitten abhängig vom Einzelfall und werden entsprechend angepasst auf den jeweiligen Anwendungsfall.

Zwischen Linearschlitten 12 und den Endbereichen der Schwingenarme 8A, 8B sind Federelemente 13, insbesondere Schraubendruckfedern, angeordnet, welche die Schwingenarme 8A, 8B gegenüber dem Linearschlitten 12 abstützen. Über die Federelemente 13 ist das angetriebene Rad gegenüber der Fahrzeugkarosserie federnd abgestützt.

Der Linearschlitten 12 lagert eine Eingangswelle (im Rahmen der vorliegenden Anmeldung auch als "erste angetriebene Welle" bezeichnet) 14, welche mit einem Antrieb, vorzugsweise einem Elektromotor, in Verbindung ist.

Die Eingangswelle 14 weist, wie insbesondere auch Fig. 2, Fig. 3 und Fig. 5 entnehmbar, eine Verzahnung 15, vorliegend eine Innenverzahnung 15, auf, über welche eine Antriebswelle des (in den Figuren nicht gezeigten) Antriebes mit der Eingangswelle 14 verbindbar ist. Die in Richtung des Antriebes gerichtete Stirnseite der Antriebswelle wird auch als Antriebsscheibe bezeichnet.

Das der Antriebsscheibe gegenüberliegende Ende der Eingangswelle 14 weist eine Außenverzahnung 16 (vgl. hierfür Fig. 1) auf, welche von einem Zahnriemen 17 teilweise umschlungen ist, um - im Zugbetrieb des Fahrzeuges - ein vom Antrieb erzeugtes und in die Eingangswelle 14 eingeleitetes Drehmoment an den Zahnriemen 17 (vgl. Fig. 2, Fig. 3 und Fig. 5) zu übertragen. Die Übertragung von Drehmoment im Schubbetrieb erfolgt entsprechend in die andere Richtung. Die vorliegende Erfindung ist aber nicht auf die Verwendung von Zahnriemen beschränkt. Vielmehr sind auch sämtliche anderen Zugmittel, wie Keilriemen oder Gliederketten verwendbar, ohne von der vorliegenden Lehre abzuweichen. Dies hängt letztlich vom Anwendungsfall (insbesondere charakterisiert durch Einsatzbedingungen, konstruktive Randbedingungen, Geschwindigkeiten und zu übertragende Kräfte) ab.

Der Zahnriemen 17 umschlingt eine Umlenkrolle 18, wodurch das in den Zahnriemen 17 eingeleitete Drehmoment an die Umlenkrolle übertragbar ist. Im Schubbetrieb kehrt sich die Richtung der Drehmomentübertragung wiederum um.

Die Umlenkrolle 18 ist teilweise umschlungen von einem weiteren Zahnriemen 19. Entsprechend ist ein Drehmoment auch zwischen Umlenkrolle und zweitem Zahnriemen 19 übertragbar. Die vorliegende Erfindung ist aber wiederum nicht auf die Verwendung von Zahnriemen beschränkt. Vielmehr sind auch hier sämtliche anderen Zugmittel, wie Keilriemen oder Gliederketten verwendbar, ohne von der vorliegenden Lehre abzuweichen. Dies hängt letztlich ebenso vom Anwendungsfall (insbesondere charakterisiert durch Einsatzbedingungen, konstruktive Randbedingungen, Geschwindigkeiten und zu übertragende Kräfte) ab.

Die Umlenkrolle ist in einer Abstützeinrichtung 20 drehbar gelagert, wobei die Abstützeinrichtung 20 am Radlagerträger 9 abgestützt ist. Dabei ist die Umlenkrolle 18 vorliegend beidseitig abgestützt. Abhängig vom Anmeldungsfall kann aber auch eine einseitige Lagerung als Abstützung ausreichend bzw. wegen Bauraumverhältnissen notwendig sein.

An der Abstützeinrichtung 20 der Umlenkrolle 18 sind zudem eine Exzenterrolle 21 sowie eine Umlenkrolle 22, beide für den zweiten Zahnriemen 19, gelagert. Eine weitere Exzenterrolle 23 sowie eine weitere Umlenkrolle 24, beide für den ersten Zahnriemen 17, sind ebenfalls an der Abstützung 20 für die Umlenkrolle abgestützt.

Die Abstützung 20 trägt dementsprechend sowohl die Umlenkrolle 9, welche das erste und das zweite Umschlingungsmittel (d.h. das erste und zweite Zugmittel) verbindet, und auch die notwendigen Führungs- und Spannrollen für die Zugmittel. Das erste und zweite Zugmittel und die notwendigen Hilfseinrichtungen sind dementsprechend am Radlagerträger 9 (also auf Seiten des angetriebenen Rades) abgestützt.

Der zweite Zahnriemen 19 umschlingt eine Synchronscheibe 25, welche mit dem Radlagerträger 9 verbunden ist, so dass eine Drehmomentübertragung zwischen zweitem Zugmittel und Synchronscheibe möglich ist.

Die Synchronscheibe 25 weist vorliegend unmittelbar Verbindungsbereiche zum Anschrauben der Felge 2 auf, so dass das Drehmoment zwischen Synchronscheibe und Felge (Rad) übertragbar ist. Alternativ kann die Synchronscheibe auch an der Radnabe befestigt sein und auch Bohrungen / Durchbrüche aufweisen zum Durchstecken von Schrauben zur Verbindung der Felge mit der Radnabe.

Zwischen Radlagerträger 9 und Synchronscheibe kann eine Bremsscheibe 26 angeordnet sein, die an dem Radlagerträger und/oder der Synchronscheibe 25 befestigt ist.

Nachfolgend wird die Funktionsweise der vorliegenden Antriebsvorrichtung, die ein zweistufiges Übersetzungssystem bildet, beschrieben mit Bezug auf den Zugbetrieb des Antriebes:
Über die Eingangswelle 14 wird eine Drehbewegung eingebracht, welche an den Zahnriemen 17 übertragen wird. Der Zahnriemen 17 treibt eine Umlenkrolle 18 an, die wiederum einen weiteren Zahnriemen 19 antreibt. Der weitere Zahnriemen 19 treibt eine Synchronscheibe 25 an. Von der Synchronscheibe wird das Moment an die Radwelle bzw. direkt an das Rad selbst übertragen.

Die vorstehend beschriebene Drehmomentübertragung beschreibt den Zugbetrieb des Antriebes, also den Zustand in dem ein Drehmoment vom Antrieb erzeugt und an das angetriebene Rad übertragen wird. Selbstverständlich wird der Kraftfluss bzw. die Momentenübertragung im Schubbetrieb, bei dem ein Moment vom angetriebenen Rad an den Antrieb übertragen wird, umgekehrt. In diesem Zustand, beispielsweise beim Ausrollen eines Fahrzeuges ist eine Rekuperation von Bremsenergie möglich, wobei das hierfür notwendige Drehmoment über das zweistufige Untersetzungsgetriebe an den Antriebsmotor übertragen wird.

Die Schwingenarme 8A, 8B sind vorliegend vertikal angeordnet, da auf diese Weise eine besonders einfache Art der Federung des angetriebenen Rades über die zwischen Führungsschlitten 12 und Schwingenarmen 8A, 8B angeordneten Federn 13 realisierbar ist. Gemäß dem in den Figuren gezeigten Ausführungsbeispiel sind diese Federungen derart gewählt, dass sich der Radlagerträger (und damit das angetriebene Rad) - betrachtet relativ zum Linearschlitten 12 bzw. zur Fahrzeugkarosserie- bei Ein- bzw. Ausfedern des Rades jeweils nach oben oder unten bewegt. Mit anderen Worten entsprechend sich die Achsen von Eingangswelle und Radwelle im Neutralzustand, d.h. die Eingangswelle 14 ist mit einer Antriebswelle des Antriebes zentriert und die Synchronscheibe 25 ist mit der Radnabe bzw. der Radwelle zentriert. Die für das Ein- bzw. Ausfedern zur Verfügung stehenden Federwege können gleich groß oder zueinander verschieden sein. Die jeweilige Federsteifigkeit der Federpakete oberhalb bzw. der Federpakete unterhalb kann vorzugsweise unterschiedlich gewählt werden, da die oberhalb des Linearschlittens angeordneten Federpakete auch das Fahrzeuggewicht tragen.

Beim Ein- / Ausfedern des Fahrzeuges bewegt sich der Radlagerträger 9 relativ zum Linearschlitten, entsprechend wird die Abstützung 20 im Uhrzeigersinn oder gegen den Uhrzeigersinn ausgelenkt. Die Abstützung 20 kann entsprechend auch als Schwenkplatte bezeichnet werden.

Der Radlagerträger 9 ist aufgrund der Verwendung zweier Zugmittel (der Zahnriemen) von Schwenkplatte, Antriebsscheibe und Synchronscheibe drehentkoppelt.

Die vorliegende Antriebsvorrichtung ermöglicht die Verwendung von Standard-Bremsscheiben.

Die Abstützung der Umlenkrolle 18 ist derart über die Schwingenarme, die Führungssäulen und die Federpakete ausgestaltet, dass die Umlenkrolle in vertikaler Richtung den halben Ein- bzw. Ausfederweg zurücklegt, da im Neutralzustand (in dem Antriebs- und Radachsen zusammenfallen) die Umlenkrolle auf gleicher Höhe zu Antriebs- und Radachse angeordnet ist.

Die vorstehend beschriebene Antriebsvorrichtung sieht eine Kraftübertragung, vorzugsweise eine Untersetzung, über Zugmittel, insbesondere Zahnriemen, vor. Die vorliegende Lehre bezieht sich dabei auf ein in einem Fahrzeugrad gelegenes zweistufiges Untersetzungsgetriebe mit Zugmitteln. Bei dieser Bauform wird die Integration von Elektromotoren wesentlich vereinfacht und in der Nähe der Radaufhängung mehr Bauraum für Energiespeicher geschaffen.

Besondere Vorteile von Zahnriemen sind der ruhige Lauf sowie die im Verhältnis zu Zahnradgetrieben hohe Unempfindlichkeit gegen Einflüsse von außen.

### Bezugszeichenliste

- 1: Rad
- 2: Felge
- 3: Reifen
- 4: Radnabe
- 5: Schraubenverbindung
- 6: Radwelle
- 7: Radlager
- 8A: Schwingenarm
- 8B: Schwingenarm
- 9: Radlagerträger
- 10: Führungssäule
- 11: Führungssäule
- 12: Linearschlitten
- 13: Federelement
- 14: Eingangswelle
- 15: Innenverzahnung
- 16: Außenverzahnung
- 17: Zahnriemen
- 18: Umlenkrolle
- 20: Abstützeinrichtung
- 21: Exzenterrolle
- 22: Umlenkrolle
- 23: Exzenterrolle
- 24:
- 25: Synchronscheibe

## Patentansprüche

1. Antriebsvorrichtung für ein Fahrzeug
• mit zumindest einem Antrieb und einem durch den Antrieb angetriebenen Rad (1), wobei zwischen Antrieb und angetriebenem Rad (1) ein zweistufiges untersetztes Zugmittelgetriebe angeordnet ist, das ein Drehmoment zwischen Antrieb und angetriebenem Rad (1) überträgt, und das einen mit einer Fahrzeugkarpsserie verbundenen Linearschlitten (12) und eine in diesem Linearschlitten (12) gelagerte und mit dem Antrieb verbundene erste angetriebene Welle aufweist, welche die Eingangswelle (14) des Zugmittels bildet, und
• mit einen Radlagerträger (9), der am Linearschlitten (12) federnd abgestützt ist,
• mit einer zweiten angetriebenen Welle (6), die über ein Radlager (7) am Radlagerträger (9) abgestützt ist, wobei diese zweite angetriebene Welle (6) eine Radnabe (4) aufweist oder mit einer solchen verbunden ist, und
• mit einer Umlenkrolle (18), welche am Radlagerträger (9) abgestützt ist,
wobei die Umlenkrolle (18) einen ersten Übergabebereich aufweist, der vom ersten Zugmittel (17) zumindest teilweise umschlungen ist, so dass das Drehmoment zwischen erstem Zugmittel (17) und Umlenkrolle (18) übertragbar ist, und
wobei die Umlenkrolle (18) einen zweiten Übergabebereich aufweist, der von einem zweiten Zugmittel (19) zumindest teilweise umschlungen ist, so dass das Drehmoment zwischen Umlenkrolle (18) und zweitem Zugmittel (15) übertragbar ist, und
**gekennzeichnet durch**
eine Synchronscheibe (25), welche einen Übergabebereich aufweist, der zumindest teilweise vom zweiten Zugmittel (19) umschlungen ist, wobei die Synchronscheibe (25) mit der Radnabe (4) verbunden ist, sodass eine Drehmomentübertragung zwischen zweitem Zugmittel (19) und Synchronscheibe (25) möglich ist, wobei die Synchronscheibe (25) unmittelbar Verbindungsbereiche zum Anschrauben der Felge (2) aufweist, so dass das Drehmoment zwischen Synchronscheibe (25) und Felge (2) übertragbar ist.

2. Antriebsvorrichtung nach Anspruch 1, wobei das zweistufige Zugmittelgetriebe im angetriebenen Rad (1), angeordnet ist.

3. Antriebsvorrichtung nach Anspruch 1 und 2, mit dem mit der Fahrzeugkarosserie verbundenen Linearschlitten (12), und mit der im Linearschlitten (12) gelagerten und mit dem Antrieb verbundenen ersten angetriebenen Welle (14), wobei die erste angetriebene Welle (14) eine Verzahnung zur Verbindung mit einer Antriebswelle (14) des Antriebs aufweist, und mit dem Radlagerträger (9), der am Linearschlitten (12) federnd abgestützt ist, und wobei der Radlagerträger (9) zumindest einen Schwingenarm und zumindest eine Führungssäule aufweist, wobei die Führungssäule am Schwingenarm (8A, 8B) befestigt ist, wobei die Führungssäule (10, 11) im Linearschlitten (12) geführt ist, und wobei zwischen Linearschlitten (12) und Radlagerträger (9) federnde Elemente (13) angeordnet sind.

4. Antriebsvorrichtung nach Anspruch 3, wobei der Radlagerträger am Linearschlitten (12) derart federnd abgestützt ist, dass beim Ein- und Ausfedern gleiche Federwege zur Verfügung stehen.

5. Antriebsvorrichtung nach einem der Ansprüche 1 bis 4, mit einer Bremseinrichtung (26), die mit dem Radlagerträger (9) verbunden ist.

## Claims

1. Drive apparatus for a vehicle
• having at least one drive and a wheel (1) which is driven by the drive, a two-stage stepped-down traction element mechanism being arranged between the drive and the driven wheel (1), which traction element mechanism transmits a torque between the drive and the driven wheel (1) and has a linear slide (12) which is connected to a vehicle body and a first driven shaft which is mounted in the said linear slide (12), is connected to the drive and forms the input shaft (14) of the traction element, and
• having a wheel bearing bracket (9) which is supported in a sprung manner on the linear slide (12),
• having a second driven shaft (6) which is supported via a wheel bearing (7) on the wheel bearing bracket (9), the said second driven shaft (6) having a wheel hub (4) or is connected to a wheel hub (4) of this type, and
• having a deflection roller (18) which is supported on the wheel bearing bracket (9), the deflection roller (18) having a first transfer region which is wrapped around at least partially by the first traction element (17), with the result that the torque can be transmitted between the first traction element (17) and the deflection roller (18), and
the deflection roller (18) having a second transfer region which is wrapped around at least partially by a second traction element (19), with the result that the torque can be transmitted between the deflection roller (18) and the second traction element (19), and
**characterized by**
a synchronizing pulley (25) which has a transfer region which is wrapped around at least partially by the second traction element (19), the synchronizing pulley (25) being connected to the wheel hub (4), with the result that a torque transmission is possible between the second traction element (19) and the synchronizing pulley (25), the synchronizing pulley (25) directly having connecting regions for screwing on the rim (2), with the result that the torque can be transmitted between the synchronizing pulley (25) and the rim (2).

2. Drive apparatus according to Claim 1, the two-stage traction element mechanism being arranged in the driven wheel (1).

3. Drive apparatus according to Claims 1 and 2, having the linear slide (12) which is connected to the vehicle body and having the first driven shaft (14) which is mounted in the linear slide (12) and is connected to the drive, the first driven shaft (14) having a toothing system for connection to a drive shaft (14) of the drive, and having the wheel bearing bracket (9) which is supported in a sprung manner on the linear slide (12), and the wheel bearing bracket (9) having at least one swing arm and at least one guide column, the guide column being fastened to the swing arm (8A, 8B), the guide column (10, 11) being guided in the linear slide (12), and sprung elements (13) being arranged between the linear slide (12) and the wheel bearing bracket (9).

4. Drive apparatus according to Claim 3, the wheel bearing bracket, being supported in a sprung manner on the linear slide (12) in such a way that identical spring travels are available during compression and rebound.

5. Drive apparatus according to one of Claims 1 to 4, having a brake device (26) which is connected to the wheel bearing bracket (9).

## Revendications

1. Dispositif d'entraînement pour un véhicule
- comprenant au moins un entraînement et une roue (1) entraînée par l'entraînement, une transmission à moyen de traction à démultiplication à deux étages étant disposée entre l'entraînement et la roue entraînée (1), laquelle transmet un couple entre l'entraînement et la roue entraînée (1), et laquelle présente un chariot linéaire (12) connecté à une carrosserie du véhicule et un premier arbre entraîné connecté à l'entraînement et supporté dans ce chariot linéaire (12), lequel arbre forme l'arbre d'entrée (14) du moyen de traction, et
- comprenant un support de palier de roue (9) qui est supporté sur ressort au niveau du chariot linéaire (12),
- comprenant un deuxième arbre entraîné (6) qui est supporté par le biais d'un palier de roue (7) au niveau du support de palier de roue (9), ce deuxième arbre entraîné (6) présentant un moyeu de roue (4) ou étant connecté à un tel moyeu de roue, et
- comprenant une poulie de renvoi (18) qui est supportée sur le support de palier de roue (9), la poulie dé renvoi (18) présentant une première région de transfert qui est au moins en partie entourée par le premier moyen de traction (17), de telle sorte que le couple puisse être transmis entre le premier moyen de traction (17) et la poulie de renvoi (18), et la poulie de renvoi (18) présentant une deuxième région de transfert qui est au moins en partie entourée par un deuxième moyen de traction (19), de telle sorte que le couple puisse être transmis entre la poulie de renvoi (18) et le deuxième moyen de traction (19), et
**caractérisé par**
un disque de synchronisation (25) qui présente une région de transfert qui est au moins en partie entourée par le deuxième moyen de traction (19), le disque de synchronisation (25) étant connecté au moyeu de roue (4) de telle sorte qu'un transfert de couple soit possible entre le deuxième moyen de traction (19) et le disque de synchronisation (25), le disque de synchronisation (25) présentant des régions de connexion de manière directe pour le vissage de la jante (2), de telle sorte que le couple puisse être transmis entre le disque de synchronisation (25) et la jante (2).

2. Dispositif d'entraînement selon la revendication 1, dans lequel la transmission à moyen de traction à deux étages est disposée dans la roue entraînée (1).

3. Dispositif d'entraînement selon la revendication 1 et 2, comprenant le chariot linéaire (12) connecté à la carrosserie du véhicule et le premier arbre entraîné (14) connecté à l'entraînement et supporté dans le chariot linéaire (12), le premier arbre entraîné (14) présentant une denture pour la connexion à un arbre d'entraînement (14) de l'entraînement, et comprenant le support de palier de roue (9) qui est supporté sur ressort au niveau du chariot linéaire (12), et dans lequel le support de palier de roue (9) présente au moins un bras oscillant et au moins une colonne de guidage, la colonne de guidage étant fixée au bras oscillant (8A, 8B), la colonne de guidage (10, 11) étant guidée dans le chariot linéaire (12) et des éléments à ressort (13) étant disposés entre le chariot linéaire (12) et le support de palier de roue (9).

4. Dispositif d'entraînement selon la revendication 3, dans lequel le support de palier de roue est supporté à ressort au niveau du chariot linéaire (12) de telle sorte que lors de la compression et de la détente du ressort, les mêmes courses de ressort soient disponibles.

5. Dispositif d'entraînement selon l'une quelconque des revendications 1 à 4, comprenant un dispositif de freinage (26) qui est connecté au support de palier de roue (9).
